# DEMANDE DE BREVET EUROPEEN

(11) **EP 4 095 961 A1**
(43) Date de publication de la demande: **30.11.2022**
(21) Numéro de dépôt: 22175228.0
(22) Date de dépôt: 24.05.2022
(51) Int. Cl.: H01M 8/2428, H01M 8/249, H01M 8/04111, H01M 8/10

(54) **SYSTÈME ÉLECTROCHIMIQUE COMPRENANT PLUSIEURS PILES À COMBUSTIBLE CONNECTÉES ÉLECTRIQUEMENT EN SÉRIE ET ALIMENTÉES EN AIR EN PARALLÈLE**

(30) Priorité: 26.05.2021 FR 2105454
(71) Demandeur: Alstom Hydrogène SAS, 13547 Aix en Provence Cedex 4 (FR)
(72) Inventeur: HAMMADI, Yacine, 13510 EGUILLES (FR); VERBECKE, Franck, 13880 VELAUX (FR); MELSCOET, Sandrine, 13510 EGUILLES (FR)
(74) Mandataire: Lavoix

(57) **Abrégé**

Le système électrochimique comprend plusieurs piles à combustible (4) identiques connectées électriquement en série et un système d'alimentation en air (18) configuré pour alimenter les piles à combustible (4) en parallèle et récupérer l'air à la sortie des piles à combustible (4), le système d'alimentation en air (18) comprenant un collecteur d'entrée (22) et un collecteur de sortie (24) comprenant chacun un conduit commun (36, 56) et des conduits individuels (38, 58), chaque conduit individuel (38) du collecteur d'entrée (22) étant raccordé à un port d'entrée d'air (4C) d'une pile à combustible (4) respective, chaque conduit individuel (58) du collecteur de sortie étant raccordé à un port de sortie d'air (4D) d'une pile à combustible (4) respective, et un unique compresseur d'air (26) pour forcer la circulation de l'air à travers le collecteur d'entrée (22), les piles à combustible (4) et le collecteur de sortie (24).

## Description

La présente invention concerne le domaine des systèmes électrochimiques comprenant plusieurs piles à combustible utilisant l'air comme fluide comburant, les piles à combustible étant connectées électriquement en série et alimentées en air en parallèle.

Une pile à combustible est configurée pour réaliser une réaction d'oxydoréduction entre un combustible contenu dans un fluide combustible et un comburant contenu dans un fluide comburant, pour produire de l'énergie électrique.

Le combustible est par exemple du dihydrogène, le fluide combustible étant du dihydrogène, et le comburant est par exemple le dioxygène, le fluide comburant étant par exemple du dioxygène ou de l'air.

Une pile à combustible comprend au moins une cellule électrochimique, et de préférence un empilement formé d'une pluralité de cellules électrochimiques superposées, chaque cellule électrochimique étant configurée pour la réalisation de la réaction d'oxydoréduction entre le combustible et le comburant.

Pour de applications nécessitant une forte puissance électrique, il est possible de prévoir un système électrochimique comprenant une pluralité de piles à combustible identiques connectées électriquement en série, les piles à combustible étant alimentées en combustible et en comburant en parallèle.

Dans un tel système électrochimique en fonctionnement, les piles à combustible connectées électriquement en série sont traversées par un même courant. Il convient donc d'assurer une alimentation uniforme et constante des piles à combustible en comburant et en combustible afin que les piles à combustible génèrent chacune la même quantité d'énergie électrique.

Pour ce faire, il est possible de munir un système d'alimentation en combustible et un système d'alimentation en comburant de dispositifs de régulation de débit et/ou de pression sophistiqués pour assurer une alimentation uniforme des piles à combustible.

Toutefois, ceci se fait au prix d'une complexification du système électrochimique, qui peut entraîner des coûts de conception, de fabrication et d'utilisation relativement élevés.

Un des buts de l'invention est de proposer un système électrochimique comprenant plusieurs piles à combustible utilisant l'air comme fluide comburant, les piles à combustible étant connectées électriquement en série et alimentée en air en parallèle, le système électrochimique étant de conception simple.

A cet effet, l'invention propose un système électrochimique pour la production d'électricité, comprenant plusieurs piles à combustible identiques connectées électriquement en série et un système d'alimentation en air configuré pour alimenter les piles à combustible en parallèle et récupérer l'air à la sortie des piles à combustible, chaque pile à combustible possédant un port d'entrée d'air et un port de sortie d'air, le système d'alimentation en air comprenant un collecteur d'entrée et un collecteur de sortie comprenant chacun un conduit commun et des conduits individuels reliés au conduit commun, chaque conduit individuel du collecteur d'entrée étant raccordé à un port d'entrée d'air d'une pile à combustible respective, chaque conduit individuel du collecteur de sortie étant raccordé à un port de sortie d'air d'une pile à combustible respective, et un unique compresseur d'air pour forcer la circulation de l'air à travers le collecteur d'entrée, les piles à combustible et le collecteur de sortie.

La prévision d'un collecteur d'entrée, d'un collecteur de sortie et d'un unique compresseur d'air pour forcer la circulation d'air à travers le collecteur d'entrée, les piles à combustible et le collecteur de sortie permet de disposer d'un système électrochimique simple.

Le collecteur d'entrée et le collecteur de sortie permettent une répartition uniforme de l'air entre les piles à combustible de manière passive, sans qu'il soit nécessaire prévoir un système actif d'uniformisation de la répartition de l'air entre les piles à combustible.

Selon des modes de réalisation particulier, le système électrochimique comprend une ou plusieurs des caractéristiques optionnelles suivantes, prises individuellement ou selon toutes les combinaisons techniquement possibles :
- au moins un parmi le collecteur d'entrée et le collecteur de sortie présente une symétrie de révolution autour d'un axe d'extension de son conduit commun ;
- au moins un parmi le collecteur d'entrée et le collecteur de sortie présente une symétrie orthogonale par rapport à au moins un plan de symétrie incluant un axe d'extension de son conduit commun ;
- au moins un parmi le collecteur d'entrée et le collecteur de sortie présente une symétrie orthogonale par rapport à deux plans de symétrie distincts incluant l'axe d'extension de son conduit commun ;
- les deux plans de symétrie sont perpendiculaires entre eux ;
- au moins un parmi le collecteur d'entrée et le collecteur de sortie est configuré de telle manière que l'axe d'extension de chacun de ses conduits individuels est parallèle à l'axe d'extension de son conduit commun ;
- l'aire de la section transversale des conduits d'au moins un parmi le collecteur d'entrée et le collecteur de sortie diminue progressivement du conduit commun vers les conduits individuels ;
- au moins un parmi le collecteur d'entrée et le collecteur de sortie comprend au moins deux ramifications entre le conduit commun et les conduits individuels ;
- chaque ramification d'au moins un parmi le collecteur d'entrée et le collecteur de sortie réalise une division d'un conduit en deux ;
- le conduit commun d'au moins un parmi le collecteur d'entrée et le collecteur de sortie est ramifié en deux conduits primaires, chaque conduit primaire étant ramifié en deux conduits secondaires ;
- chaque conduit secondaire est terminé par un conduit individuel respectif ;
- il comprend exactement quatre piles à combustible ;
- les piles à combustible sont agencées suivant un agencement matriciel ;
- les piles à combustibles sont toutes disposées avec la même orientation ;
- le collecteur d'entrée et le collecteur de sortie sont identiques.

L'invention et ses avantages seront mieux compris à la lecture de la description qui va suivre, donnée uniquement à titre d'exemple non limitatif, et fait en référence aux dessins annexés, sur lesquels :
- la Figure 1 est une vue schématique d'un système électrochimique comprenant plusieurs piles à combustible ;
- la Figure 2 est une vue schématique du système électrochimique illustrant l'agencement des piles à combustible, un collecteur d'entrée et un collecteur de sortie ;
- la Figure 3 est une vue en perspective du collecteur d'entrée ;
- la Figure 4 est une vue en perspective du collecteur de sortie ; et
- la Figure 5 est une vue en coupe schématique d'une ramification primaire d'un collecteur d'entrée.

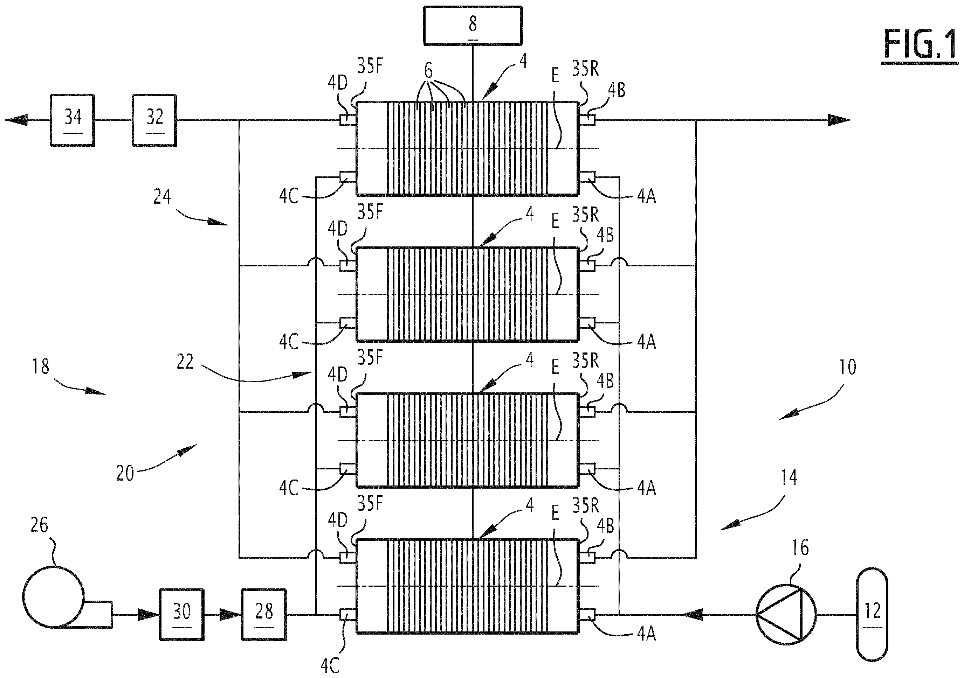

Tel qu'illustré sur la Figure 1, le système électrochimique 2 de production d'électricité comprend plusieurs piles à combustible 4 identiques, chaque pile à combustible 4 comprenant un empilement formé de plusieurs cellules électrochimiques 6 superposées.

Chaque pile à combustible 4 s'étend par exemple un axe central E, les cellules électrochimiques 6 étant superposées suivant cet axe central E.

Chaque cellule électrochimique 6 est configurée pour générer de l'électricité par réalisation d'une réaction d'oxydoréduction entre un combustible contenu dans un fluide combustible et un comburant contenu dans un fluide comburant.

Chaque pile combustible 4 est par exemple une pile à combustible à membrane échangeuse d'ions, en particulier une pile à combustible échangeuse de protons (ou PEMFC pour « Proton Exchange Membrane Fuel Cell »).

De manière connue, chaque cellule électrochimique 6 comprend une première chambre pour la circulation du fluide combustible et une deuxième chambre pour la circulation du fluide comburant, la première chambre et la deuxième chambre étant séparées par une membrane échangeuse d'ions, en particulier une membrane échangeuse de protons.

Chaque pile à combustible 4 est par exemple configurée pour utiliser du dihydrogène (H2) comme combustible, le fluide combustible étant par exemple du dihydrogène.

Chaque pile à combustible 4 est configurée pour utiliser de l'air comme fluide comburant, le comburant étant le dioxygène présent dans l'air.

Chaque pile à combustible 4 comprend un port d'entrée de fluide combustible 4A pour l'entrée du fluide combustible dans la pile à combustible 4 et l'alimentation en fluide combustible de chaque cellule électrochimique 6, et un port de sortie de fluide combustible 4B pour la sortie du fluide combustible après son passage à travers les cellules électrochimiques 6 de la pile à combustible 4.

Chaque pile à combustible 4 comprend un port d'entrée d'air 4C pour l'entrée de l'air dans la pile à combustible 4 et l'alimentation en air de chaque cellule électrochimique 6, et un port de sortie d'air 4D pour la sortie de l'air après son passage à travers les cellules électrochimiques 6 de la pile à combustible 4.

Les piles à combustible 4 sont connectées électriquement en série. Ainsi, en fonctionnement, les piles à combustible 4 sont traversées par le même courant électrique.

Les piles à combustible 4 sont par exemple connectées à une charge électrique 8 pour fournir de l'électricité à cette charge électrique 8. La charge électrique 8 comprend par exemple des batteries pour le stockage de l'électricité ou un moteur électrique.

Le système électrochimique 2 comprend un système d'alimentation en fluide combustible 10 comprenant une source de fluide combustible 12.

Le système d'alimentation en fluide combustible 10 comprend un circuit de fluide combustible 14 reliant les ports d'entrée de fluide combustible 4A des piles à combustible 4 à la source de fluide combustible 12, de préférence en parallèle.

Le circuit de fluide combustible 14 comprend par exemple une pompe 16 agencée pour forcer la circulation du fluide combustible dans le circuit de fluide combustible 14. La pompe 16 est disposée par exemple entre la source de fluide combustible 12 et les ports d'entrée de fluide combustible 4A des piles à combustible 4.

Le système électrochimique 2 comprend un système d'alimentation en air 18 configuré pour alimenter les piles à combustible 4 en air.

Le système d'alimentation en air 18 comprend un circuit d'air 20, les piles à combustible 4 étant disposées en parallèle dans le circuit d'air 20.

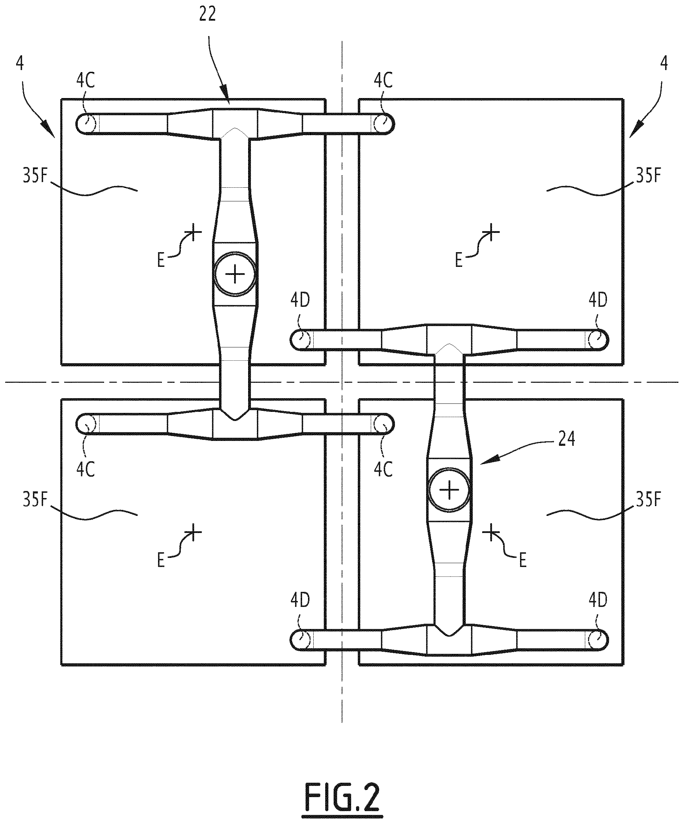

Le système d'alimentation en air 18 comprend un collecteur d'entrée 22 (Figure 2) configuré pour distribuer un flux d'air entrant entre les ports d'entrée d'air 4C des piles à combustible 4, et un collecteur de sortie 24 (Figure 2) configuré pour récupérer l'air sortant des ports de sortie d'air 4D des piles à combustible 4 pour former un flux d'air sortant.

Le collecteur d'entrée 22 et le collecteur de sortie 24 se présentent chacun sous la forme d'une tubulure pour conduire le flux d'air de manière passive, respectivement en amont des piles à combustible 4 et en aval des piles à combustible 4.

Le collecteur d'entrée 22 et le collecteur de sortie 24 sont dépourvus de tout organe actif de régulation du flux d'air muni d'un actionneur pour réguler activement le flux d'air.

Le système d'alimentation en air 18 comprend un unique compresseur d'air 26 agencé pour forcer la circulation d'air à travers les piles à combustible 4 via le collecteur d'entrée 22 et le collecteur de sortie 24, plus précisément, en série à travers le collecteur d'entrée 22, les piles à combustible 4 et le collecteur de sortie 24.

De préférence, le compresseur d'air 26 est disposé dans le circuit d'air 20 en amont du collecteur d'entrée 22. Le compresseur d'air 26 pousse l'air dans le collecteur d'entrée 22, les piles à combustible 4 et le collecteur de sortie 24.

Le compresseur d'air 26 génère le flux d'air entrant qui alimente les piles à combustible 4 en parallèle par l'intermédiaire du collecteur d'entrée 22. Le collecteur de sortie 24 récupère l'air en sortie des piles à combustible 4 pour former le flux d'air sortant.

En option, le système d'alimentation en air 18 comprend au moins un dispositif de filtrage d'air 28 configuré pour filtrer l'air avant son entrée dans les piles à combustible 4.

De préférence, le système d'alimentation d'air 18 comprend un seul dispositif de filtrage d'air 28 qui est disposé en amont du collecteur d'entrée 22. Ainsi, un seul dispositif de filtrage d'air 28 permet de filtrer l'air fourni à une pluralité de piles à combustible 4.

Avantageusement, le dispositif de filtrage d'air 28 est disposé en aval du compresseur d'air 26.

En option, le système d'alimentation en air 18 comprend au moins un dispositif de refroidissement 30 configuré pour refroidir l'air avant son entrée dans les piles à combustible 4. Ceci permet de refroidir l'air chauffé du fait de la compression avant son entrée dans les piles à combustible 4.

De préférence, le système d'alimentation en air 18 comprend un seul dispositif de refroidissement 30 disposé entre le compresseur d'air 26 et le collecteur d'entée 22.

Lorsqu'un dispositif de filtrage d'air 28 est prévu, de préférence, le dispositif de refroidissement 30 est disposé en amont du dispositif de filtrage d'air 28. Ceci permet de préserver le dispositif de filtrage d'air 28 en limitant son exposition à la chaleur.

En option, le système d'alimentation en air 18 comprend, par exemple en aval du collecteur de sortie 24, un dispositif de régulation 32 configuré pour réguler le débit d'air dans les piles à combustible 4.

Le dispositif de régulation 32 comprend par exemple une vanne mobile de manière à diminuer ou augmenter une section de passage du flux d'air.

De préférence, le système d'alimentation en air 18 comprend un évent 34 pour rejeter l'air dans l'atmosphère après son passage à travers les piles à combustible 4. L'évent 34 est situé en aval du collecteur de sortie 24, et, le cas échéant du dispositif de régulation 32.

Sur la Figure 1, les piles à combustible 4 sont représentées schématiquement en vue de côté et alignées les unes à côté des autres pour illustrer le système d'alimentation en fluide combustible 10 et le système d'alimentation en air 18.

Comme illustré sur la Figure 2, les piles à combustible 4 sont de préférence agencées les unes à côté des autres suivant une configuration tridimensionnelle.

Les piles à combustible 4 sont par exemple agencées suivant une configuration matricielle, dans laquelle les piles à combustible 4 sont disposées en lignes et colonnes, ou une configuration circulaire, dans laquelle les piles à combustible 4 sont réparties sur un cercle imaginaire.

Ceci permet de disposer les piles à combustible 4 de manière à faciliter leur alimentation uniforme en air.

Dans un exemple de réalisation particulièrement avantageux, comme représenté sur la Figure 2 sur laquelle les piles à combustibles 4 sont représentées en vue de face, les piles à combustible sont au nombre de quatre et disposées suivant un agencement matricielle 2x2.

Les piles à combustible 4 sont par exemple disposées de façon que, en vue de face des piles à combustible 4, leurs axes centraux E sont disposés aux quatre coins d'un carré imaginaire.

Les piles à combustible 4 sont de préférence disposées de telle sorte que leurs axes centraux E sont parallèles entre eux.

Chaque pile à combustible 4 possède une face avant 35F et une face arrière 35R situées aux extrémités de la pile à combustible 4 suivant l'axe central E d'empilement des cellules électrochimiques 6.

Les piles à combustible 4 sont disposées de préférence de façon que leurs faces avant 35F sont tournées dans la même direction et leurs faces arrières 35R sont tournées dans la même direction.

Les faces avant 35F des piles à combustible 4 sont de préférence disposées dans un même plan (le plan de la Figure 2).

Les ports d'entrée d'air 4C des piles à combustible 4 sont par exemple situés sur les faces avant 35F des piles à combustible 4.

Les piles à combustible 4 sont de préférence disposées dans la même orientation autour de leurs axes d'empilement E respectifs.

Dans l'exemple illustré, la face avant 35F de chaque pile à combustible 4 présente un contour rectangulaire, chaque pile à combustible 4 étant orientée autour de son axe d'empilement E de telle manière que les bords de la face avant 35F sont parallèle aux directions des lignes et des colonnes de l'agencement matricielle des piles à combustible 4, le port d'entrée d'air 4C de chaque pile à combustible 4 étant situé dans le coin supérieur gauche de la face avant 35F.

Dans un exemple de réalisation préféré, les ports de sortie d'air 4D des piles à combustible sont situées aussi sur les faces avant 35F des piles à combustible 4.

Lorsque la face avant de chaque pile à combustible 4 est de forme rectangulaire, le port d'entrée d'air 4C et le port de sortie d'air 4D sont par exemple situés chacun dans un coin respectif de la face avant, en particulier dans deux coins diagonalement opposés.

Comme illustré sur la Figure 2, le port de sortie d'air 4D de chaque pile à combustible 4 est par exemple situé dans le coin inférieur droit de la face avant de la pile à combustible 4.

Le collecteur d'entrée 22 (aussi appelé « distributeur ») est configuré pour distribuer le flux d'air généré par le compresseur d'air 26 entre les ports d'entrée d'air 4C des piles à combustible 4 de manière uniforme.

Le collecteur d'entrée 22 comprend un conduit commun 36 et une pluralité de conduit individuels 38 raccordés au conduit commun 36, chaque conduit individuel 38 étant raccordé au port d'entrée d'air 4C d'une pile à combustible 4 respective.

En considérant le sens d'écoulement de l'air, le conduit commun 36 se divise progressivement pour former les conduits individuels du collecteur d'entrée 22.

Le collecteur d'entrée 22 comprend un conduit individuel 38 respectif pour chaque pile à combustible 4. Le port d'entrée d'air 4C de chaque pile à combustible 4 est raccordé à un conduit individuel 38 respectif du collecteur d'entrée 22.

Le conduit commun 36 du collecteur d'entrée 22 s'étend suivant un axe d'extension commun A et chaque conduit individuel 38 du collecteur d'entrée 22 s'étend suivant un axe d'extension individuel B respectif.

Dans un exemple de réalisation, les axes d'extension individuel B des conduits individuels 38 sont parallèles à l'axe d'extension commun A du conduit commun 36.

Avantageusement, le collecteur d'entrée 22 présente une symétrie de rotation discrète autour de l'axe d'extension commun A de son conduit commun 36.

Le collecteur d'entrée 22 présente une symétrie de rotation d'ordre n autour de l'axe d'extension A de son conduit commun 36, n étant un nombre entier positif. Le collecteur d'entrée 22 est dans ce cas invariant par rotation autour de l'axe d'extension commun A de son conduit commun 36 d'un angle de 2π/n.

Le collecteur d'entrée 22 présente par exemple une symétrie orthogonale par rapport à au moins un plan de symétrie incluant l'axe d'extension commun A du conduit commun 36.

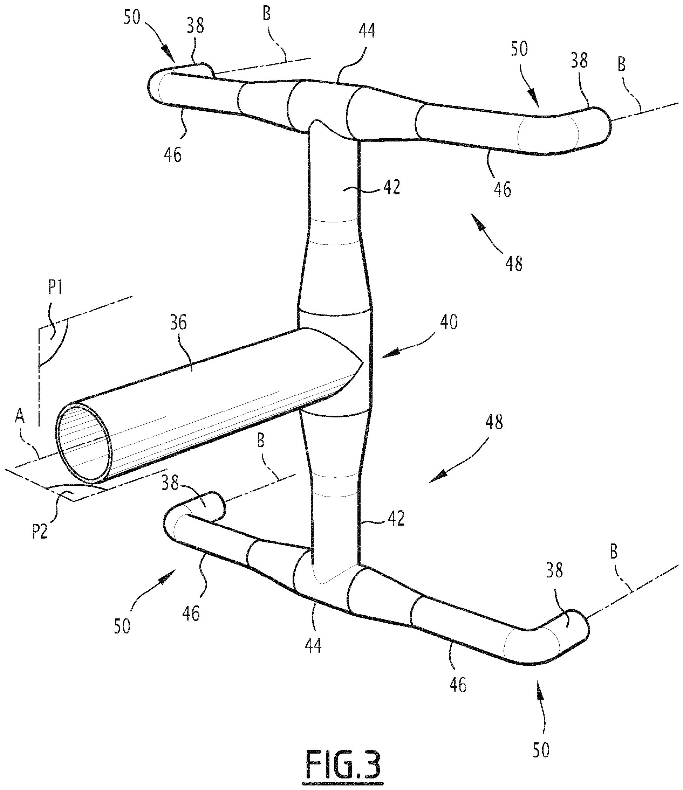

Dans un exemple de réalisation particulier, comme illustré sur la Figure 3, le collecteur d'entrée 22 présente une symétrie orthogonale par rapport à deux plans de symétrie P1, P2 distincts incluant chacun l'axe d'extension commun A du conduit commun 36, les deux plans de symétrie P1 et P2 étant de préférence perpendiculaires entre eux.

Le collecteur d'entrée 22 comprend par exemple au moins deux ramifications entre le conduit commun 36 et les conduits individuels 38. Chaque ramification réalise par exemple une division d'un conduit amont en deux autres conduits aval.

Comme illustré sur la Figure 3, le collecteur d'entrée 22 est par exemple configuré avec son conduit commun 36 subdivisé au niveau d'une ramification primaire 40 en deux conduits primaires 42, chaque conduit primaire 42 étant lui-même ramifié au niveau d'une ramification secondaire 44 en deux conduits secondaires 46. Chaque conduit secondaire 46 est par exemple terminé par un conduit individuel 38 respectif.

Un tel collecteur d'entrée 22 comprend ainsi quatre conduits individuels 38. Il est configuré pour un système électrochimique 2 comprenant quatre piles à combustible 4 comme illustré sur la Figure 2.

Le collecteur d'entrée 22 comprend deux parties de collecteur 48 s'étendant chacune à partir de la ramification primaire 40, chacune des deux parties de collecteur 48 étant symétrique de l'autre par rapport au plan de symétrie P1.

Chaque partie de collecteur 48 inclut une ramification secondaire 44 respective et deux sous-parties de collecteur 50 s'étendant à partir de la ramification secondaire 44, chacune des deux sous-partie de collecteur 50 étant symétrique de l'autre par rapport au plan de symétrie P2.

De préférence, l'aire de la section transversale des conduits du collecteur d'entrée diminue progressivement du conduit commun 36 vers les conduits individuels 38.

En particulier, l'aire de la section transversale des conduits du collecteur d'entrée 22 diminue progressivement après chaque ramification (par ex. ramification primaire 40 et ramification secondaire 44), en se déplaçant du conduit commun 36 vers les conduits individuels 38.

Dans l'exemple illustré, l'aire de la section transversale des conduits diminue progressivement le long des conduits primaires 42 et des conduits secondaires 46. Chaque conduit primaire 42 et chaque conduit secondaire 46 présente une section transversale dont l'air diminue progressivement.

En considérant le sens d'écoulement de l'air, l'aire de la section transversale des conduits du collecteur d'entrée 22 diminue progressivement de l'amont (conduit commun 36) vers l'aval (conduits individuels 38).

La diminution de l'aire de la section transversale de chaque conduit du collecteur d'entrée 22 est réalisée sur toute la longueur du conduit ou sur une fraction de la longueur du conduit.

Dans l'exemple illustré sur la Figure 3, la diminution de l'aire de la section transversale des conduits primaires 42 et des conduits secondaires 44 est réalisée sur une fraction de la longueur de ces conduits.

Le collecteur de sortie 24 est également configuré pour assurer une répartition uniforme de l'air entre les piles à combustible 4.

Pour ce faire, il est configuré pour réunir les flux d'air séparés sortant des ports de sortie d'air 4D des piles à combustible 4 en formant un flux de sortie commun, en assurant des conditions d'écoulement identiques pour les différents flux d'air séparés.

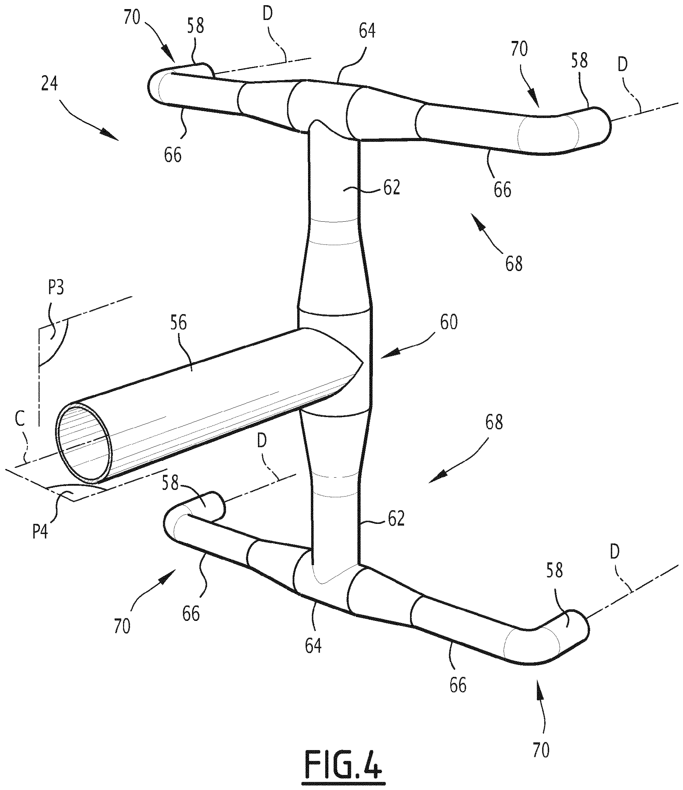

Pour ce faire, comme illustré sur la Figure 4, le collecteur de sortie 24 est par exemple analogue au collecteur d'entrée 22.

Le collecteur de sortie 24 comprend un conduit commun 56 et une pluralité de conduit individuels 58 raccordés au conduit commun 56, chaque conduit individuel 58 étant raccordé au port de sortie d'air 4D d'une pile à combustible 4 respective.

En considérant le sens d'écoulement de l'air, les conduits individuels 58 du collecteur de sortie 24 se réunissent pour former le conduit commun 56 du collecteur de sortie 24.

Le collecteur de sortie 24 comprend un conduit individuel 58 respectif pour chaque pile à combustible 4. Le port de sortie d'air 4D de chaque pile à combustible 4 est raccordé à un conduit individuel 58 respectif du collecteur de sortie 24.

Le conduit commun 56 du collecteur de sortie 24 s'étend suivant un axe d'extension commun C et chaque conduit individuel 58 du collecteur de sortie 24 s'étend suivant un axe d'extension individuel D respectif.

Dans un exemple de réalisation, les axes d'extension individuel D des conduits individuels 58 du collecteur de sortie 24 sont parallèles à l'axe d'extension commun C du conduit commun 56 du collecteur de sortie 24.

Avantageusement, le collecteur de sortie 24 présente une symétrie de rotation discrète autour de l'axe d'extension commun C de son conduit commun 56.

Le collecteur de sortie 24 présente une symétrie de rotation d'ordre n autour de l'axe d'extension commun C de son conduit commun 56. Le collecteur de sortie 24 est dans ce cas invariant par rotation autour de l'axe d'extension commun C de son conduit commun 56 d'un angle de 2π/n.

Le collecteur de sortie 24 présente par exemple une symétrie orthogonale par rapport à au moins un plan de symétrie incluant l'axe d'extension commun C de son conduit commun 56.

Dans un exemple de réalisation particulier, comme illustré sur la Figure 4, le collecteur de sortie présente une symétrie orthogonale par rapport à deux plans de symétrie P3, P4 distincts incluant chacun l'axe d'extension commun C du conduit commun 56, les deux plans de symétrie P3, P4 étant de préférence perpendiculaires entre eux.

Le collecteur de sortie 24 comprend par exemple au moins deux ramifications entre le conduit commun 56 et les conduits individuels 58. Chaque ramification réalise par exemple une division d'un conduit aval en deux autres conduits amont.

Comme illustré sur la Figure 4, le collecteur de sortie 24 est par exemple configuré avec son conduit commun 56 subdivisé au niveau d'une ramification primaire 60 en deux conduits primaires 62, chaque conduit primaire 62 étant lui-même ramifié au niveau d'une ramification secondaire 64 en deux conduits secondaires 66. Chaque conduit secondaire 66 est par exemple terminé par un conduit individuel 58 respectif.

Un tel collecteur de sortie 24 comprend ainsi quatre conduits individuels 58. Il est configuré pour un système électrochimique 2 comprenant quatre piles à combustible 4 comme illustré sur la Figure 2.

Le collecteur de sortie 24 comprend deux parties de collecteur 68 s'étendant chacune à partir de la ramification primaire 62, chacune des deux parties de collecteur 68 étant symétrique de l'autre par rapport au plan de symétrie P4.

Chaque partie de collecteur 68 inclut une ramification secondaire 64 respective et deux sous-parties de collecteur 70 s'étendant à partir de la ramification secondaire 64, chacune des deux sous-partie de collecteur 70 étant symétrique de l'autre par rapport au plan de symétrie P3.

De préférence, l'aire de la section transversale des conduits du collecteur de sortie 24 diminue progressivement du conduit commun 56 vers les conduits individuels 58.

En particulier, l'aire de la section transversale des conduits du collecteur de sortie 24 diminue progressivement après chaque ramification (par ex. ramification primaire 60 et ramification secondaire 64), en se déplaçant du conduit commun 56 vers les conduits individuels 58.

En considérant le sens d'écoulement de l'air, l'aire de la section transversale des conduits du collecteur de sortie 24 augmente de l'amont (conduits individuels 58) vers l'aval (conduit commun 56).

Dans l'exemple illustré, l'aire de la section transversale des conduits diminue progressivement le long des conduits primaires 62 et des conduits secondaires 66. Chaque conduit primaire 62 et chaque conduit secondaire 66 présente une section transversale dont l'aire diminue progressivement.

La diminution de l'aire de la section transversale de chaque conduit du collecteur de sortie 24 est réalisée sur toute la longueur du conduit ou sur une fraction de la longueur du conduit.

Dans l'exemple illustré sur la Figure 4, la diminution de l'aire de la section transversale des conduits primaires 62 et des conduits secondaires 66 est réalisée sur une fraction de la longueur de ces conduits.

Comme illustré sur les Figures 3 et 4, chaque ramification (ramification primaire 40 et ramifications secondaires 44 du collecteur d'entrée 22, ramification primaire 60 et ramifications secondaires 64 du collecteur de sorite 24) présente une forme générale en « T ».

En variante, au moins une ou chacune des ramifications entre un premier conduit et deux deuxième conduits s'étendant à partir du deuxième conduit, présente une forme en « Y ».

Ceci permet d'éviter l'apparition de surpression localisées pouvant entraîner une non uniformité de l'écoulement de l'air dans les différents conduits de même niveau d'un collecteur (collecteur d'entrée 22 ou collecteur de sortie 24).

Les deux deuxièmes conduits peuvent être coudés.

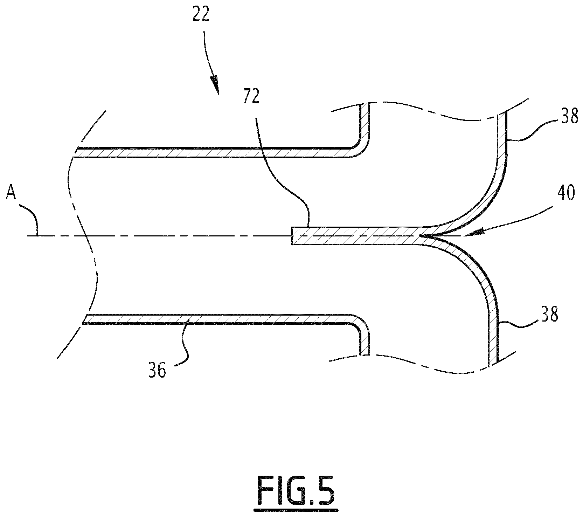

Corne illustré sur la Figure 5, le conduit commun 36 (premier conduit) d'un collecteur d'entrée 22 se divise au niveau d'une ramification primaire 40 en deux conduits primaires 42 (deuxième conduits), la ramification primaire 40 présentant une forme en Y. Les conduits primaires 42 sont coudés.

La Figure 5 illustre à titre d'exemple le cas d'une ramification primaire 40 du collecteur d'entée 22, mais ceci peut bien entendu s'appliquer à une ramification primaire du collecteur de sortie 24 et/ou à chaque ramification secondaire 44 du collecteur d'entrée 24 et/ou à chaque ramification secondaire 64 du collecteur de sortie 24.

Des ramifications de même niveau (ramifications secondaires, éventuelles ramification tertiaires...) d'un collecteur présentent de préférence le même type de forme, afin d'assurer un écoulement uniforme entre les différentes piles à combustibles 4.

Dans un exemple à quatre piles à combustible 4 avec un collecteur d'entrée 22 possédant des ramifications secondaires 44, ces ramification secondaires 44 présentent la même forme (par exemple en « T » ou en « Y »).

Dans un exemple à quatre piles à combustible 4 avec un collecteur de sortie 24 possédant des ramifications secondaires 64, ces ramifications secondaires 64 présentent la même forme (par exemple en « T » ou en « Y »).

Optionnellement, au moins une ou chaque ramification divisant un premier conduit se divisant en deux deuxièmes conduits, possède une cloison intermédiaire s'étendant dans le premier conduit à partir de la ramification, la cloison intermédiaire divisant le premier conduit en deux parties symétriques par rapport à la cloison intermédiaire.

Ceci permet d'éviter l'apparition de turbulences à la jonction entre les deux deuxièmes conduits et d'améliorer l'uniformité de l'écoulement de l'air entre les deux deuxièmes conduits.

Comme illustré sur la Figure 5, la ramification primaire 40 du collecteur d'entée 22 est munie d'une cloison intermédiaire 72 s'étendant dans le conduit commun 38 en le séparant en deux parties symétriques de part et d'autre de la cloison intermédiaire 72 en amont des conduits primaires 42.

La Figure 5 illustre à titre d'exemple le cas d'une ramification primaire 40 du collecteur d'entée 22, mais ceci peut bien entendu s'appliquer à une ramification primaire 60 du collecteur de sortie 24 et/ou à chaque ramification secondaire 44 du collecteur d'entrée 22 et/ou à chaque ramification secondaire 64 du collecteur de sortie 24.

Si une ramification d'un collecteur (collecteur d'entrée 22 ou collecteur de sortie 24) possède une cloison intermédiaire, alors les autres ramifications de même niveau de ce collecteur possède aussi une cloison intermédiaire.

En particulier, lorsqu'une ramification secondaire 44 du collecteur d'entrée 22 possède une cloison intermédiaire 72, l'autre ramification secondaire 44 de ce collecteur d'entrée 22 en possède une aussi, et lorsque qu'une ramification secondaire 64 du collecteur de sortie 24 possède une cloison intermédiaire 72, l'autre ramification secondaire 64 de ce collecteur de sortie 24 en possède une aussi.

Dans un exemple de réalisation, le système électrochimique 2 possède une puissance nominale / maximale comprise entre 150 et 350 kW. Chaque pile à combustible 4 possède une puissance nominale / maximale comprise entre 40 et 100 kW.

De préférence, le compresseur d'air 26 possède un débit nominal / maximal compris entre 250 et 600 g/sec.

Le système électrochimique 2 peut être configuré pour une utilisation stationnaire, par exemple comme source d'énergie électrique principale ou auxiliaire pour un bâtiment, ou pour une utilisation mobile, par exemple comme source d'énergie électrique embarquée dans un véhicule routier, par exemple une voiture individuelle, un véhicule de transport en commun ou un poids lourd, un véhicule ferroviaire ou un véhicule aérien.

Grâce à l'invention, il est possible d'obtenir un système électrochimique 2 simple permettant d'alimenter en air en parallèle une pluralité de piles à combustible 4 reliées électriquement en série.

La prévision d'un collecteur d'entrée 22 et d'un collecteur de sortie 24 permet une distribution uniforme de l'air entre les piles à combustible 4 à partir d'un flux d'air entrant fourni par un unique compresseur d'air 26, de sorte que les piles à combustibles, traversées par la même intensité de courant, puissent fonctionner dans les mêmes conditions.

Les caractéristiques du collecteur d'entrée 22 et du collecteur de sortie 24, notamment leur symétrie de rotation discrète ou leur(s) symétrie(s) orthogonale(s) par rapport à un ou plusieurs plan(s) de symétrie (P1, P2 ; P3, P4) permet(tent) une distribution uniforme de l'air au sein de chaque collecteur.

L'aménagement optimal des piles à combustible 4 facilite la prévision d'un collecteur d'entrée 22 et/ou d'un collecteur de sortie 24 présentant une telle ou de telles symétrie(s) favorisant la distribution uniforme de l'air entre les piles à combustible 4.

L'utilisation d'un unique compresseur d'air 26 permet de simplifier le système d'alimentation en air 18.

Il est possible d'obtenir un système électrochimique 2 de production d'électricité qui possède une forte puissance, tout en étant de conception simple.

En outre, le compresseur d'air 26 est un des composants d'un système électrochimique qui présente une fiabilité moindre par rapport aux autres composants. La mise en place d'un seul compresseur d'air 26 au lieu de plusieurs compresseurs d'air permet de simplifier le pilotage et aussi d'améliorer la fiabilité et de simplifier la maintenance.

Le collecteur d'entrée 22 et le collecteur de sortie 24 sont de préférence analogues et possèdent par exemple chacun les caractéristiques indiquées ci-dessus.

Il est possible néanmoins qu'un parmi le collecteur d'entrée 22 et le collecteur de sortie 24 possède une caractéristique que l'autre ne possède pas.

De manière générale, pour chacune des caractéristiques décrites auparavant, au moins un parmi le collecteur d'entrée 22 et le collecteur de sortie 24 possède ladite caractéristique. En d'autres termes, le collecteur d'entrée 22 et/ou le collecteur de sortie 24 possède(nt) chacune des caractéristiques.

L'invention n'est pas limitée aux exemples de réalisation présenté, d'autres exemples de réalisation étant envisageables.

En particulier, le nombre de piles à combustible 4 dans le système de production d'électricité 2 n'est pas nécessairement égal à quatre. Il peut être par exemple de deux, trois ou plus de quatre.

## Revendications

1. Système électrochimique pour la production d'électricité, comprenant plusieurs piles à combustible (4) identiques connectées électriquement en série et un système d'alimentation en air (18) configuré pour alimenter les piles à combustible (4) en parallèle et récupérer l'air à la sortie des piles à combustible (4), chaque pile à combustible (4) possédant un port d'entrée d'air (4C) et un port de sortie d'air (4D), le système d'alimentation en air (18) comprenant un collecteur d'entrée (22) et un collecteur de sortie (24) comprenant chacun un conduit commun (36, 56) et des conduits individuels (38, 58) reliés au conduit commun (36, 56), chaque conduit individuel (38) du collecteur d'entrée (22) étant raccordé à un port d'entrée d'air (4C) d'une pile à combustible (4) respective, chaque conduit individuel (58) du collecteur de sortie étant raccordé à un port de sortie d'air (4D) d'une pile à combustible (4) respective, et un unique compresseur d'air (26) pour forcer la circulation de l'air à travers le collecteur d'entrée (22), les piles à combustible (4) et le collecteur de sortie (24).

2. Système électrochimique selon la revendication 1, dans lequel au moins un parmi le collecteur d'entrée (22) et le collecteur de sortie (24) présente une symétrie de révolution autour d'un axe d'extension (A, C) de son conduit commun (36, 56).

3. Système électrochimique selon la revendication 1 ou la revendication 2, dans lequel au moins un parmi le collecteur d'entrée (22) et le collecteur de sortie (24) présente une symétrie orthogonale par rapport à au moins un plan de symétrie (P1, P2 ; P3, P4) incluant un axe d'extension (A, C) de son conduit commun (36, 56).

4. Système électrochimique selon l'une quelconque des revendications précédentes, dans lequel au moins un parmi le collecteur d'entrée (22) et le collecteur de sortie (24) présente une symétrie orthogonale par rapport à deux plans de symétrie (P1, P2 ; P3, P4) distincts incluant l'axe d'extension (A, C) de son conduit commun (36, 56).

5. Système électrochimique selon la revendication 4, dans lequel les deux plans de symétrie (P1, P2 ; P3, P4) sont perpendiculaires entre eux.

6. Système électrochimique selon l'une quelconque des revendications précédentes, dans lequel au moins un parmi le collecteur d'entrée (22) et le collecteur de sortie (24) est configuré de telle manière que l'axe d'extension (B, D) de chacun de ses conduits individuels (38, 58) est parallèle à l'axe d'extension (A, C) de son conduit commun (36, 56).

7. Système électrochimique selon l'une quelconque des revendications précédentes, dans lequel l'aire de la section transversale des conduits d'au moins un parmi le collecteur d'entrée (22) et le collecteur de sortie (24) diminue progressivement du conduit commun (36, 56) vers les conduits individuels (38, 58).

8. Système électrochimique selon l'une quelconque des revendications précédentes, dans lequel au moins un parmi le collecteur d'entrée (22) et le collecteur de sortie (24) comprend au moins deux ramifications (40, 44 ; 60, 64) entre le conduit commun (36, 56) et les conduits individuels (38, 58).

9. Système électrochimique selon la revendication 8, dans lequel chaque ramification (40, 44 ; 60, 64) d'au moins un parmi le collecteur d'entrée (22) et le collecteur de sortie (24) réalise une division d'un conduit en deux.

10. Système électrochimique selon l'une quelconque des revendications précédentes, dans lequel le conduit commun (36, 56) d'au moins un parmi le collecteur d'entrée (22) et le collecteur de sortie (24) est ramifié en deux conduits primaires (42, 62), chaque conduit primaire (42, 62) étant ramifié en deux conduits secondaires (46, 66).

11. Système électrochimique selon la revendication 10, dans lequel chaque conduit secondaire (46, 66) est terminé par un conduit individuel (38, 58) respectif.

12. Système électrochimique selon l'une quelconque des revendications précédentes, comprenant exactement quatre piles à combustible (4).

13. Système électrochimique selon l'une quelconque des revendications précédentes, dans lequel les piles à combustible (4) sont agencées suivant un agencement matriciel.

14. Système électrochimique selon la revendication 13, dans lequel les piles à combustible (4) sont toutes disposées avec la même orientation.

15. Système électrochimique selon l'une quelconque des revendications précédentes, dans lequel le collecteur d'entrée (22) et le collecteur de sortie (24) sont identiques
